Europäisches Patentamt

(19) European Patent Office

Office européen des brevets

(11) Numéro de publication: **0 170 604**
**A1**

## (12) DEMANDE DE BREVET EUROPEEN

(21) Numéro de dépôt: 85450016.2

(22) Date de dépôt: 26.06.85

(51) Int. Cl.⁴: **B 24 B 45/00**
**B 24 D 7/16, B 23 B 31/22**

(30) Priorité: 20.07.84 FR 8411675

(43) Date de publication de la demande:
05.02.86 Bulletin 86/6

(84) Etats contractants désignés:
AT BE CH DE FR GB IT LI LU NL SE

(71) Demandeur: S.A.R.L. CEMERA
45 Chemin de la Pause
F-81100 Castres(FR)

(72) Inventeur: Carayon, Jean
45 Chemin de la Pause
F-81100 Castres(FR)

(74) Mandataire: Ravina, Bernard
Cabinet Bernard RAVINA 24, boulevard Riquet
F-31000 Toulouse(FR)

(54) Dispositif pour la fixation d'un outil, par exemple une meule, à la broche d'une machine outil et machine outil équipée d'un tel dispositif.

(57) Dispositif pour la fixation d'un outil rotatif, par exemple une meule, à la broche d'une machine outil et une machine outil équipée d'un tel dispositif.

Le dispositif conformément à l'invention comprend un plateau porte outil (3) amovible pourvu d'un macaron (4) qui s'engage dans le logement d'un corps (6) sur lequel coulisse un bague (11) laquelle repousse des billes (10) ddans une gorge (5) du macaron lorsque la dite bague est mobile vers une position de blocage. Un diaphragme (13) permet de maintenir la bague en position de blocage ou re déblocage et un système mécanique réversible (14) de transmission du mouvement de translation entre la bague (11) et le macaron (4) du plateau (3) permet d'assurer le déplacement de la bague vers sa position de blocage lorsque le macaron est enfoncé dans le logement (7) et force le macaron (4) à se dégager du logement (7) lorsque la bague (11) est déplacée vers sa position de déblocage.

La présente invention a également pour objet une machine équipée d'un tel dispositif.

./...

EP 0 170 604 A1

Fig. 1

DISPOSITIF POUR LA FIXATION D'UN OUTIL ROTATIF, PAR EXEMPLE UNE MEULE, A LA BROCHE D'UNE MACHINE OUTIL ET MACHINE OUTIL EQUIPEE D'UN TEL DISPOSITIF.

La présente invention a pour objet, un dispositif pour la fixation d'un outil rotatif, par exemple une meule à la broche d'une machine outil, et une machine outil équipée d'un tel dispositif.

On sait que les techniques de ponçage exigent l'emploi de meules de différentes caractéristiques (grosseur du grain, nature de l'abrasif) pour mener à terme l'opération de ponçage.

Généralement, les meules sont montées sur un plateau circulaire qui se visse dans la broche de la machine.
Avec ce type de matériel, le changement des meules ne peut être opéré que d'une manière manuelle.

Ainsi les opérations de ponçage, qui exigent de fréquent changement de meules soit qu'elles soient usées soit qu'elles ne correspondent pas à l'opération à effectuer, ne peuvent pas être optimisées par automatisation des changements d'outil.

Le but de la présente invention est de pallier à l'inconvénient précédemment énoncé en mettant en oeuvre un dispositif pour la fixation d'un outil rotatif, par exemple une meule, à la broche d'une machine outil pour lequel l'opération de montage ou de démontage de l'outil puisse être effectuée d'une manière simple, rapide et facilement automatisable.

Dans ce but le dispositif selon l'invention pour la fixation d'un outil rotatif, par exemple une meule, à la broche d'une machine outil se caractérise essentiellement en ce qu'il est constitué :

- par un plateau porte meule, amovible, pourvu d'un macaron lequel est doté d'une gorge,

- par un corps, vissé à la broche de la machine, présentant un logement cylindrique axial dans lequel s'engage le macaron de manière à ce que sa gorge se dispose en regard d'orifices radiaux pratiqués dans la paroi cylindrique du corps, dans chacun desquels est monté en coulissement un organe de blocage radial qui, soit s'engage dans la gorge du macaron, soit s'en dégage selon qu'une bague mobile axialement autour du corps, pourvue d'un chan frein interne, est soit déplacée axialement dans un sens suivant lequel le chanfrein est amené en contact avec les organes radiaux pour forcer ceux ci à pénétrer dans la gorge, soit déplacée axialement dans l'autre sens pour permettre au chanfrein de libérer les organes radiaux qui libèrent alors la gorge du macaron,

- par un système mécanique d'immobilisation de la bague en translation lorsque celle ci est soit disposée dans une position de blocage suivant laquelle les organes radiaux sont engagés dans la gorge du macaron, soit suivant une position de déblocage suivant laquelle le chanfrein de la dite bague a libéré les organes radiaux de blocage,

- et par un système mécanique, reversible, de transmission du mouvement de translation entre la bague et le plateau porte outil de sorte que lorsque le macaron du plateau porte outil est introduit dans le logement du corps, la bague se déplace axialement de sa position de déblocage vers sa position de blocage et de sorte que lorsque la bague est déplacée axialement de sa position de blocage vers sa position de déblocage le porte outil soit dégagé du logement du corps du dispositif.

Suivant une autre caractéristique, le système mécanique reversible de transmission du mouvement de translation entre le plateau porte outil et la bague, déplace cette dernière vers le dit porte outil lorsque celui ci est engagé dans le logement du corps et est poussé vers la broche de la machine, ou pousse le plateau porte outil hors du logement du corps lorsque la bague est déplacée vers la broche de la machine, c'est à dire vers sa position de déblocage.

On conçoit que la solidarisation de l'outil à la broche de la machine n'est provoquée seulement que par le mouvement d'introduction du porte outil dans le logement du corps, et que la désolidarisation de l'outil n'est provoquée que par le déplacement axial de la bague depuis sa position de blocage vers sa position de déblocage.

En outre, il faut noter que soit le déplacement de la bague en vue du déblocage du plateau porte outil ou soit le déplacement de ce dernier dans le logement en vue de son blocage s'effectuent suivant la même direction à savoir vers la broche de la machine.
Ceci contribue à faciliter l'automatisation de la mise en place ou du dégagement de l'outil.

Suivant encore une autre caractéristique de l'invention le système mécanique d'immobilisation de la bague en translation soit dans une position de blocage soit dans une position de déblocage est constitué par un diaphragme élastique, conique, disposée coaxialement au dispositif, solidaire par son pourtour externe, de la bague mobile et par son pourtour interne du corps du dispositif,

**0170604**

le dit diaphragme pouvant se déformer élastiquement de manière à inverser sa conicité et le dit diaphragme pouvant présenter deux états d'équilibres stables, un de cet état correspondant à une conicité dirigée vers la broche, l'autre à une conicité dirigée vers le logement.

Pour déplacer la bague de sa position de déblocage vers sa position de blocage la force exercée sur celle ci, pour créer ce déplacement, doit vaincre les forces élastiques internes du diaphragme qui s'opposent à sa déformation et à l'inversion de sa conicité.

Lorsque la conicité du diaphragme s'inverse les forces élastiques internes de celui-ci contribuent, avec la poussée exercée sur la bague, à amener celle-ci en position de blocage.

Lorsque la bague est déplacée axialement de sa position de blocage vers sa position de déblocage, les forces élastiques internes du diaphragme s'opposent tout d'abord également à sa déformation et à l'inversion de sa conicité. Lorsque la conicité s'inverse, les forces élastiques internes s'ajoutent à la force de poussée exercée sur la bague pour amener celle-ci en position de déblocage.

Il est à noter que les forces élastiques internes du diaphragme maintiennent la bague soit en position de blocage soit en position de déblocage en l'absence d'effort de poussée axiale exercées sur cette dernière.

D'autres avantages et caractéristiques de l'invention apparaitront à la lecture de la description d'une forme préférentielle de réalisation, donnée à titre d'exemple non limitatif, en se référant aux dessins annexes en lesquels :

- La figure 1 est une vue en coupe du dispositif, le plateau porte outil étant monté dans le corps.

- La figure 2 est une vue en coupe du dispositif, le plateau porte outil étant retiré du corps.

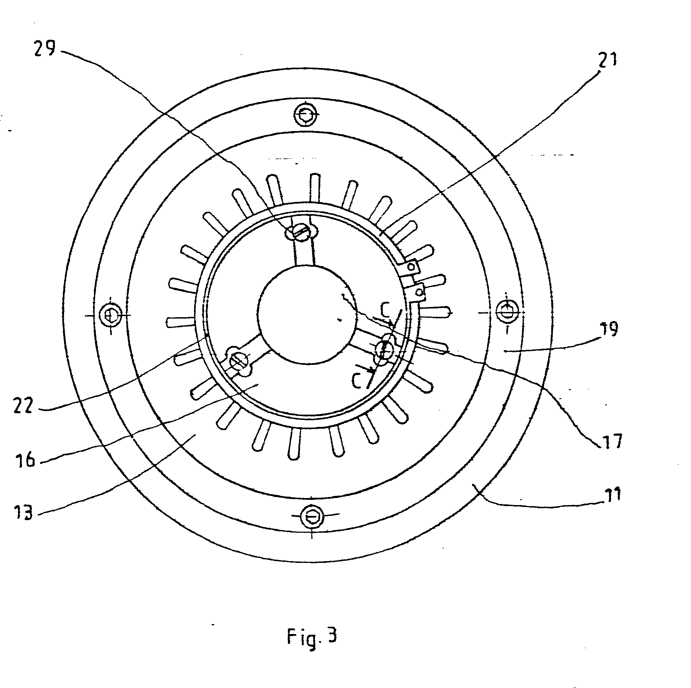

- La figure 3 est une vue de dessus du corps du dispositif équipé de la bague mobile et du système de blocage en translation de la dite bague.

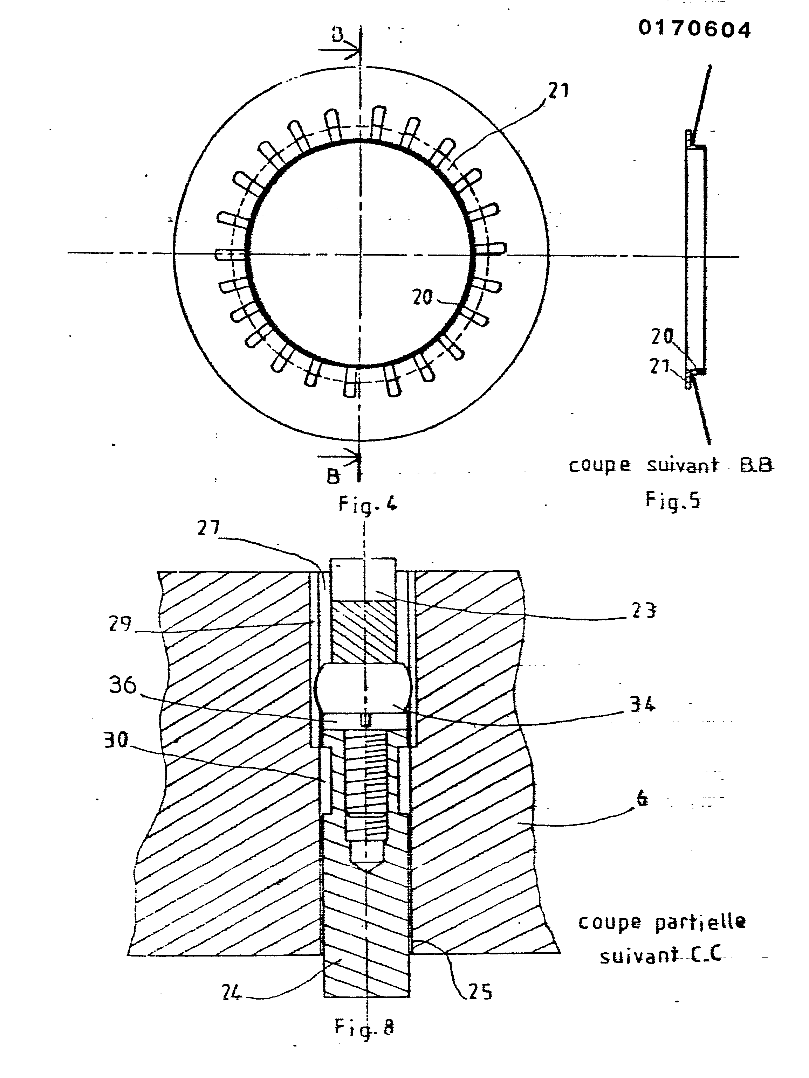

- La figure 4 est une vue en plan du système mécanique d'immobilisation de la bague en translation.

- La figure 5 est une vue en coupe selon la ligne BB de la fig 4.

- La figure 6 est une demie vue à échelle agrandie qui montre le détail de la fixation du système selon la fig.4, au dispositif.

- La figure 7 est une vue en plan du levier du système mécanique de transmission du mouvement entre la bague et le plateau porte meule

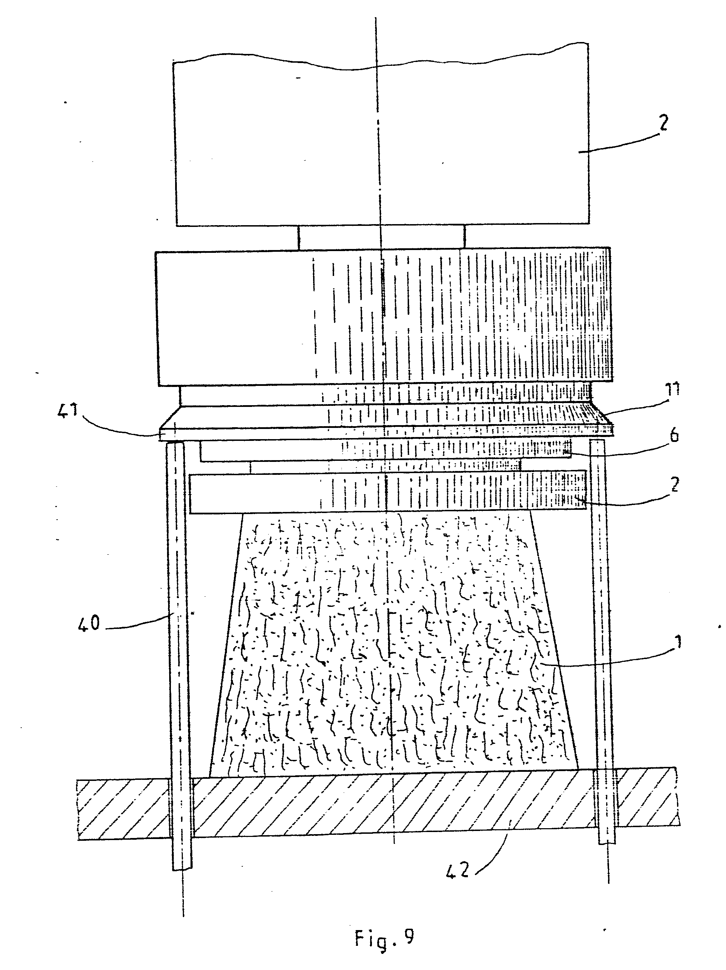

- La figure 8 est une vue en coupe partielle selon la ligne CC de la fig.3 pour montrer le poussoir du système mécanique de transmission du mouvement entre la bague et le plateau.

- La figure 9 est une vue extérieure du dispositif.


Tel que représenté le dispositif, selon l'invention, pour la fixation d'un outil rotatif, par exemple une meule 1, à la broche 2 d'une machine outil comprend un plateau porte meule 3, amovible, pourvu d'un macaron 4 lequel est doté d'une gorge 5 de forme trapézoidale. Le dispositif comprend également un corps 6, de forme générale cylindrique, fixé à la broche 2 de la machine, pourvu d'un logement cylindrique axial 7 dans lequel se loge et se bloque le macaron 4 du plateau porte meule 3.

Le plateau porte meule 3 est constitué par un disque circulaire, métallique prolongé axialement par le macaron 4 lequel est de forme cylindrique.

L'extrémité supérieure du macaron est conformée en cône 4A pour faciliter son introduction dans le logement 7 du corps 6. Pour améliorer encore l'introduction dans le logement 7, ce dernier pourra également comporter une entrée conique.

Le corps 6 comporte une paroi cylindrique 9 qui se raccorde à une paroi circulaire transversale 15. La face interne de la paroi cylindrique 9 et la face interne de la paroi 15 délimitent le logement cylindrique 7 lequel correspond sensiblement aux formes et dimensions du macaron 4. Dans l'axe du corps 1 la paroi 15 est surmontée d'un bossage cylindrique 16 percé d'un orifice axial fileté 17 qui débouche dans le logement 7. Dans cet orifice fileté est vissée la portion filetée de l'arbre rotatif de sortie de la broche 2 de la machine outil.

Le macaron 4 est engagé dans le logement 7 de manière à ce que la gorge 5 se dispose en regard d'orifices radiaux 8 pratiqués dans la paroi cylindrique 9 du corps 6.

Dans chacun de ces orifices est monté en coulissement un organe radial de blocage 10 qui soit s'engage dans la gorge 5 du macaron 4 soit d'en dégage selon qu'une bague 11 mobile axialement autour du corps 6, pourvue d'un chanfrein interne 12, est soit déplacée axialement dans un sens suivant lequel le chanfrein 12 est amené en contact avec les organes de blocage radiaux pour forcer ceux ci à pénétrer dans la gorge 5, soit déplacée axialement dans l'autre sens pour permettre au chanfrein 12 de libérer les organes radiaux de blocage 10 qui libèrent alors la gorge 5 du macaron 4.

De préférence, la paroi 9 du corps 6 est percée de trois orifices radiaux 8. Les orifices sont de forme cylindrique et sont angulairement répartis.

0170604

Chaque orifice radial 8 est ouvert vers la bague 11 et vers le logement 7 du corps 6.

De préférence l'organe radial de blocage 10 qui se monte dans chaque orifice 8 est constitué par une bille, de diamètre supérieur à l'épaisseur de la paroi 9, en sorte de pouvoir pénétrer dans le logement 7 en étant poussée par la bague 11.

Pour interdire à chaque bille 10 de s'extraire de l'orifice 8 et de pénétrer complètement dans le logement 7 chaque orifice 8 se rétrécit du côté du dit logement.

La bague 11 est constituée par un élément tubulaire cylindrique alesé, dont le diamètre interne de l'alesage est légèrement supérieur au diamètre externe du corps 6 de manière à pouvoir coulisser librement sur ce dernier.

Le chanfrein 12 est pratiqué en extrémité inférieure de la bague 11, dans sa face interne l'extrémité inférieure étant celle qui est disposée du côté du plateau porte meule.

De préférence l'évasement conique que constitue le chanfrein 12 est prolongé vers le plateau porte meule 3 par une portion cylindrique 11A qui constitue un dégagement.

De cette manière lorsque le dégagemnt 11A est amené en regard des orifices 8 les billes 10 peuvent s'effacer de la gorge du macaron et s'extraire complètement du logement 7 du corps 6.

Lorsque le dégagement 11A est disposé en regard des orifices 8 la bague est disposée suivant une position de déblocage.

Lorsque la bague 11 coulisse axialement sur le corps 6 pour quitter cette position de déblocage et venir en position de blocage,

8

0170604

cette position de blocage étant celle suivant laquelle le porte outil est solidaire du corps 6, le chanfrein 12 repousse progressivement les billes 10 vers le logement 7 et vers la gorge 5 du macaron 4.

Par la suite la face interne cylindrique 11B de la bague vient obstruer partiellement ou totalement les orifices 8 pour s'opposer au retrait des billes 10 de la gorge 5 du macaron et du logement axial 7.

Pour maintenir la bague soit en position de blocage, cette position de blocage étant celle suivant laquelle les organes radiaux de blocage 10 sont engagés dans la gorge du macaron, soit en position de déblocage, cette position de déblocage étant celle suivant laquelle le chanfrein 12 a libéré les organes radiaux de blocage et suivant laquelle le dégagement 11A est disposé en regard des orifices 8 il est prévu un système mécanique 13 d'immobilisation en translation.

Selon une forme préférée de réalisation le système mécanique 13 d'immobilisation de la bague 11 en translation axiale le long du corps 6 est constitué par un diaphragme élastique, conique disposé coaxialement au dispositif, solidaire par son pourtour externe de la bague 11 et par son pourtour interne du corps 6 du dispositif, le dit diaphragme 13 pouvant se déformer élastiquement de manière à inverser sa conicité, et pouvant présenter deux états d'équilibres stables, un de ces états correspondants à une conicité dirigée vers la broche l'autre à une conicité dirigée vers le plateau porte meule 3.

Le diaphragme élastique 13 se développe de façon générale suivant

9

un tronc de cône.

Le diaphragme est constitué en acier à ressort.

Le diaphragme présente une couronne périphérique 13B, en tronc de cône, très peu déformable radialement à laquelle est raccordée une pluralité de pattes élastiques radiales 13A, de même longueur, dirigées vers l'axe AA du tronc de cône, dont l'extrémité libre de chacune est sur une circonférence de cercle centré à l'axe AA et prend appui sur la périphérie d'une bague circulaire 20, coaxiale à l'axe AA, très peu déformable radialement.

Le diamètre interne de la bague 20 du diaphragme correspond sensiblement au diamètre externe du bossage 16 du corps 6 pour pouvoir s'enfiler sur ce bossage 16.

Avantageusement, le diaphragme est principalement constitué par une rondelle élastique conique du type de celles connu de l'homme de l'art sous le terme de rondelle élastique.

Cette rondelle forme la partie 13B et les parties 13A du diaphragme.

Dans ce cas de figure la bague 20 est rapportée sur la rondelle et présente une collerette d'arrêt 21 qui prend appui sur les pattes 13A.

Le diaphragme ainsi défini est solidaire, par son pourtour externe 13B, de l'extrémité supérieure de la bague 11, la dite extrémité étant celle qui est disposée au plus près de la broche 2, et est solidaire, par sa bague 20, de l'extrémité inférieure du bossage 16, la dite extrémité inférieure étant celle qui se trouve au plus près de la paroi 15 du corps 6.

Pour solidariser le diaphragme 13 à l'extrémité supérieure de la bague 11 cette dernière est dotée d'une gorge 18 qui débouche dans son alesage.

Dans cette gorge 18 se loge le pourtour externe 13B du diaphragme 13.

A titre d'exemple la gorge 18 est formée par un lamage, pratiqué en extrémité de la bague 11, recouvert par une couronne circulaire 19 montée en fixation en extrémité supérieure de la dite bague.

Pour solidariser à l'extrémité inférieure du bossage 16, le pourtour interne du diaphragme 13 c'est à dire la bague 20 il est prévu un anneau élastique 22 monté dans une gorge du bossage 16 au dessus de la bague 20.

L'anneau élastique 22 constitue un obstacle au déplacement de la bague 20 du diaphragme, le long du bossage 16. De préférence la bague 20 est disposée de manière à ce que la collerette 21 soit tournée vers l'anneau 22, en sorte que la dite collerette délimite avec la surface externe de la paroi 15 une gorge annulaire dans laquelle est logée l'extrémité libre de chaque patte 13A.

Il est à noter enfin que la surface externe de la paroi 15 est conformée en tronc de cône afin de ne pas constituer un obstacle à la déformation du diaphragme lorsque celui-ci tourne sa conicité vers le haut c'est à dire lorsque les génératrices du tronc de cône convergent vers la broche 2.

En considérant le déplacement de la bague 11 depuis sa position de déblocage vers sa position de blocage on va expliquer maintenant le fonctionnement du diaphragme 13.

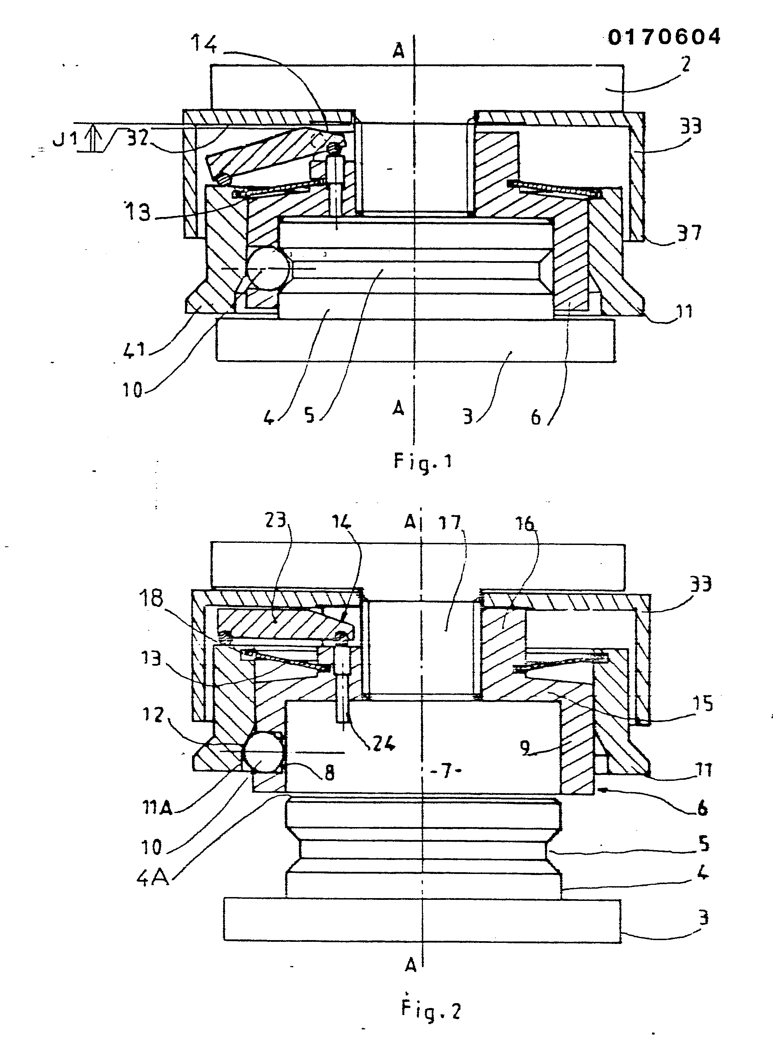

Lorsque la bague 11 est en position de déblocage (fig.2) la conicité du diaphragme est dirigée vers le bas c'est à dire que les génératrices du tronc de cône suivant lequel il se développe convergent vers le logement 7 du corps 6.

Dans cette position le pourtour externe 13B du diaphragme 13 est placé au dessus de la bague 20 et l'extrémité supérieure de cette dernière est surélevée par rapport à la paroi 15 du corps 6.

Toujours dans cette position, le dégagement 11A de la bague est disposé en regard des orifices 8 et les billes 10 montées dans ces orifices sont dégagées du logement 7.

Pour déplacer la bague de sa position de déblocage vers sa position de blocage, l'effort à appliquer sur celle-ci doit vaincre les forces élastiques internes du diaphragme qui s'opposent à sa déformation et à l'inversion de sa conicité.

Lorsque la bague 11 se déplace vers sa position de blocage le diaphragme 11 s'évase, et la circonférence suivant laquelle sont disposées les extrémités des pattes 11A a tendance à diminuer de diamètre.

Comme ces pattes 11A, par construction, sont appuyées sur la périphérie de la bague 20, elles sont soumises à deux efforts radiaux de compression qui créent un effet de flambage.

Ces efforts radiaux de compression sont dus aux efforts de réaction de la bague 20 sur l'extrémité libre des pattes 13A, et aux efforts de réaction de la zone 13B sur les dites pattes.

Le flambage des pattes 13A permet la diminution de la distance radiale entre la bague 20 et le contour circonférentiel de la zone 13B et permet le déplacement de la bague 11 le long du corps 6. Lorsque la bague 11 dépasse le point de son parcours suivant lequel le contour externe du diaphragme est disposé suivant un plan P qui contient la bague 20 et qui est perpendiculaire à l'axe AA, la conicité est inversée et l'effet de flambage des pattes 13A tend à diminuier. La bague attend alors sa position de blocage.

Au cours du mouvement de la bague 11 de sa position de déblocage vers sa position de blocage le chanfrein 12 repousse progressivement les billes 10 vers le logement 7 et vers la gorge 5 du macaron.

Lorsque la bague atteint sa position de blocage la face interne de celle-ci qui délimite son alesage vient obstruer en partie ou en totalité les orifices 8.

Cette face interne s'oppose au retrait des billes 10 de la gorge 5 du macaron 4 et du logement 7.

Dans la position de blocage la conicité du diaphragme est dirigée vers le haut c'est à dire que les génératrices du tronc de cône suivant lequel il se développe convergent vers la broche 2.

Toujours suivant cette position, l'extrémité supérieure de la bague 2 est disposée à un niveau inférieur par rapport à la bague 20.

Egalement en position de blocage le diaphragme porte sur la face externe de la paroi 15

Il y a lieu de noter également que lorsque le diaphragme inverse sa conicité les forces élastiques internes du diaphragme contribuent avec la poussée exercée sur la bague à amener celle-ci en position de blocage.

Il est à noter que la rondelle élastique du diaphragme, lorsque la bague 11 est en positon de blocage, est disposée dans le dispositif en sorte de présenter une conicité naturelle c'est à dire que la dite rondelle élastique en l'absence de toutes sollicitations se tourne suivant cette conicité.

Cette caractéristique permet d'obtenir une position de blocage particulièrement stable.

De cette manière le plateau porte meule 3 au cours d'un cycle de travail ne pourra se détacher inopinément du corps 6.

Un autre avantage de cette caractéristique comme on le verra plus avant, réside dans le fait que l'effort axial de poussée peut être interrompu lorsque le contour externe du diaphragme a franchit le plan P sus évoqué.

Pour déplacer la bague 11 de sa position de blocage vers sa position de déblocage celle ci est soumise à un effort axial de sens inverse de celui du cas précédent.

Comme pour le cas précédent, au cours de ce mouvement le diaphragme se déforme et les pattes 13A de celui-ci sont également soumises à un effet de flambage.

Lorsque le diaphragme inverse sa conicité les forces exercées sur la bague 11 dues à l'effet de flambage des pattes 13A s'ajoutent à l'effort axial de poussée et contribuent à amener la bague 11 en position de déblocage.

Lorsque la bague 11 atteint cette position l'effort axial de poussée peut être annulé.

La bague 11 sera maintenue dans cette position, en l'absence d'effort axial de sens inverse, seulement par le diaphragme 13.

Le dispositif est également équipé d'au moins un système mécanique 14 reversible de transmission du mouvement de translation entre la bague 11 et le plateau porte meule 3 de sorte que lorsque le macaron 4 du plateau porte meule 3 est introduit dans le logement 7 du corps 6 la bague 11 se déplace axialement de sa position de déblocage vers sa position de blocage et de sorte que lorsque la bague 11 est déplacée axialement de sa position de blocage vers sa position de déblocage, le plateau porte outil soit forcé à se dégager du logement 7 du corps 6 du dispositif.

Selon une forme préférentielle de réalisation le système mécanique 14 déplace la bague 11 vers le plateau porte outil c'est à dire vers sa position de blocage lorsque le macaron de ce dernier est forcé à pénétrer dans le logement 7, et force le macaron 4 du dit plateau à s'extraire de ce logement 7 lorsque la bague 11 est déplacée vers la broche 2 de la machine, c'est à dire vers sa position de déblocage.

On conçoit aisément que pour l'effort nécessaire pour forcer le macaron à pénétrer dans le logement 7 et que l'effort nécessaire pour déplacer la bague vers la position de déblocage sont dirigés tous deux vers la broche 2 de la machine.
Ainsi le montage et le démontage du plateau porte meule 3 peut être facilement automatisé comme décrit plus avant.

Avantageusement, le dispositif est équipé de trois systèmes mécaniques 14 qui sont chacun disposés suivant un plan qui contient l'axe du dispositif. Les trois plans sont décalés les uns par rapport aux autres de 120°.

Chaque système mécanique 14 est constitué par un levier basculant 23 radial au dispositif, monté en pivotement au dessus de la paroi 15, dont une extrémité au delà du point de pivotement coopère en appui avec l'extrémité supérieure de la bague 11 c'est à dire la couronne 19 de la dite bague 11 et dont l'autre extrémité en deça du point de pivotement coopère en appui avec l'extrémité supérieure saillante d'un poussoir mobile 24, s'étendant verticalement, dont l'extrémité inférieure coopère en appui, dans le logement 7, avec le macaron 4 du plateau porte outil.

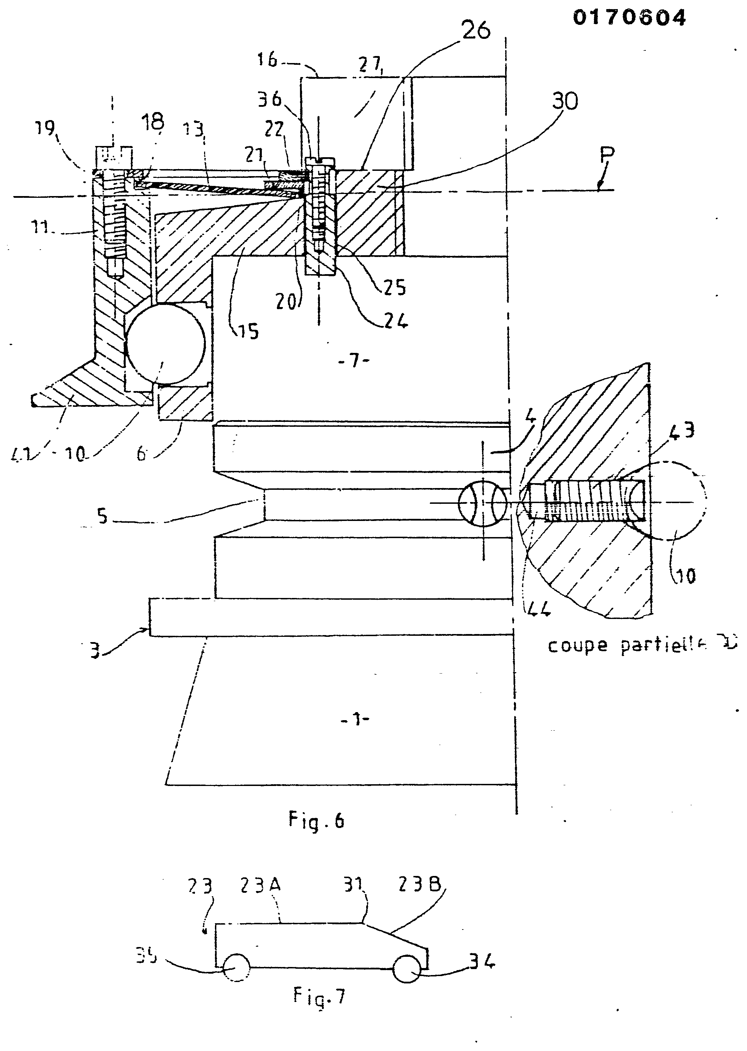

Comme représenté plus particulièrement en fig.6, chaque poussoir 24 coulisse dans un orifice 25, d'axe parallèle à l'axe du dispositif, qui débouche d'une part dans le logement 7 du corps 6 et d'autre part dans le fond 26 d'une saignée 27 pratiquée radialement dans le bossage 16 du cops 6, dans laquelle est montée en coulissement l'extrémité correspondante du levier 23.

Comme la largeur de la saignée est inférieure au diamètre du poussoir les flans verticaux de cette dernière sont chacun pourvus, dans le prolongement de l'orifice 25, d'une gorge 29 en arc de cercle en sorte de permettre le libre coulissement du poussoir dans la dite saignée.
Pour limiter son déplacement, soit vers la broche, soit vers le logement 7 du corps 6 le poussoir est équipé d'un dégagement large 30 dans lequel s'engage une section de l'anneau élastique 22, la gorge de ce dernier débouchant dans l'orifice 25.

Le fonctionnement du système mécanique 14 est le suivant :
- Lorsque la bague 17 est en position de déblocage (fig.1), l'extrémité inférieure ces poussoirs 24 est introduite dans le logement 7.

- Le macaron 4 lorsqu'il est introduit dans le logement, vient buter contre les poussoirs 24 et pousse ceux ci vers la broche 2.

Au cours de ce mouvement les pussoirs 24 agissent sur les leviers 23 qui basculent et exercent une poussée axiale sur la bague 11. Cette bague se déplace alors vers le plateau porte meule 3 et vers sa position de blocage.

En fin de course les billes sont introduites dans la gorge 5 du macaron 4, ce qui assure la solidarisation de la meule 1 à la broche de la machine.

Lorsque la bague est déplacée de sa position de blocage vers sa position de déblocage celle ci en agissant sur les leviers 23, assure leur basculement.

Ces leviers agissent alors sur les poussoirs 24 qui s'introduisent alors dans le logement 7 pour repousser le macaron hors du logement 7.

Il est necessaire que les leviers 23 n'agissent pas sur les poussoirs 24 tant que le chanfrein 12 de la bague n'est pas disposé en regard des orifices 8.

Dans ce but, un jeu J1 est prévu entre la bague 11 et l'extrémité des leviers 23.

Le jeu J1 apparait entre l'extrémité du levier et la couronne 19 lorsque d'une part l'autre extrémité du levier est appuyée sur le poussoir et d'autre part lorsque ce poussoir est en appui sur le macaron.

Le jeu J1 permet de déplacer axialement la bague vers sa position de déblocage en sorte que celle-ci amène le chanfrein interne 12 en regard des orifices 8 avant d'actionner les leviers 23.

On conçoit que le jeu J1 diminue la course utile des leviers 23 pour déplacer la bague de sa position de déblocage vers sa position de blocage.

Ceux ci n'est pas gênant dans la mesure ou la course utile des leviers 23 est suffisament importante pour permettre au contour externe du diaphragme de franchir le plan P.

Après ce passage l'action de poussée axiale exercée par les leviers sur la bague, peut être interrompu en raison du fait que les forces élastiques internes de la rondelle peuvent à elles seules amener la bague 11 en position de blocage.

Selon une première forme de réalisaiton chaque levier 23 est articulé au dispositif par tous moyens connus.

Selon une forme préférée de réalisation, chaque levier 23 présente une arête de pivotement 31 qui s'appuie lors du pivotement du levier, sur une surface de butée 32 perpendiculaire à l'axe AA du dispositif, disposée au dessus des dits leviers, ménagée dans une coiffe 33 montée entre la broche 2 et l'extrémité supérieure du bossage 16.

L'arête 31 est formée par l'intersection de deux surfaces du levier, 23A et 23B dont une est en pente par rapport à l'autre . Les deux surfaces planes 23A et 23B forment un angle saillant dirigé vers la surface d'appui 32.

Cet angle saillant est suffisament prononcé pour éviter que les surfaces planes 23A et 23B portent sur la surface de butée 32 au cours du basculement du levier 23, ce qui constituerait un obstacle à ce basculement.

Avec un tel type de levier le jeu J1 sus évoqué se situe entre l'arête 31 et la surface de butée 32.

Pour régler ce jeu, chaque poussoir 24 est doté d'une vis 36 qui supporte l'extrémité du levier, qui est engagée dans un orifice fileté pratiqué dans le dit poussoir suivant son axe longitudinal.

L'extrémité du levier 23 qui coopère avec le poussoir 24 est pourvue d'un rondin de guidage 34 qui s'engage par ses extrémités dans les gorges verticales 29 ménagées dans les flans de la saignée 27. Ce rondin 34 a également pour but de retenir radialement le levier dans la saignée 27.

Ainsi cette extrémité coulisse dans la saignée 27 suivant une direction parallèle à l'axe AA du dispositif.

Il est à noter que le rondin 34 porte sur le poussoir 24.

L'autre extrémité du levier située en deçà de l'arête de pivotement comporte également un rondin 35 qui s'appuie sur la couronne 19 de la bague mobile 11.

La coiffe 33 est constituée par une paroi 37 en forme de disque dont la surface tournée vers les leviers constitue la surface de butée 32.

A cette paroi 37 est raccordée une paroi cylondrique 38 qui s'étend vers le plateau porte outil et entoure l'extrémité supérieure de la bague 11.

La paroi en forme de disque 37 est pourvue d'un orifice 39 pour venir s'emmancher sur l'extrémité supérieure du bossage 16.

Préférentiellement autour de cet orifice est ménagé un embrevement de centrage qui vient en appui contre un épaulement pratiqué en extrémité supérieure du bossage 16.

Le dispositif tel que décrit se prête mieux à l'automatisation du montage et du démontage du plateau porte outil.

A titre d'exemple, la machine outil est équipée d'une tête à broches multiples qui sont équipées chacune d'un dispositif précit. Cette machine comporte donc plusieurs outils par exemple quatre.

Cette machine est associée à un controleur programmagle qui commande ses différents déplacements et notamment commande le déplacement de la machine vers un poste de chargement,et de déchargement des outils

Ce poste de chargement est constitué par un plan de rangement 42 divisé en plusieurs zones de rangement qui sont susceptibles chacune de recevoir un groupe de quatre outils équipés chacun d'un plateau support, et à chacune desquelles sont associées plusieurs tiges 40 verticales mobiles axialement susceptibles, soit de venir en saillie sur le plan de rangement pour coopérer avec une collerette externe 41 menagée en extrémité inférieure de la bague 11, soit susceptibles d'être escamotées sous le dit plan de rangement.

A chaque zone de rangement correspond un outil meule et un seul. L'outil meule est disposé sur cette zone de manière à ce que le plateau 3 soit tourné vers le haut.

Il est bien évident que les tiges 40 ne sont données qu'à titre d'exemple. Ces tiges pourront être remplacées par tous moyens équivalents connus de l'homme de l'art.

Pour le chargement ou le déchargement d'un outil le controleur programmable commande les déplacements de la machine vers la zone de rangement correspondante et une fois que la broche 2 de la machine est disposée au dessus de la dite zone, commande le mouvement descendant de la broche vers la zone de rangement.

Dans le cas d'un déchargement d'outil le controleur programmable commande la montée des tiges 40 en sorte que celles ci se disposent en saillie sur le plan de rangement et constituent un obstacle au mouvement descendant de la bague 11.

De cette manière lorsque la broche 2 descent vers la zone de rangement la bague 11 est animée par rapport au dispositif d'un mouvement relatif de translation depuis sa position de blocage vers sa position de déblocage.

Dans le cas d'un chargement d'outil les tiges 40 sont escamotées sous le plan rangement. Au cours du mouvement de descente de la broche 2 les poussoirs 24 viennent prendre appui sur le macaron du plateau porte outil et sont immobilisés en translation par rapport au plan de rangement mais sont animés d'un mouvement relatif de translation par rapport au corps 6.

Selon une forme préférentielle de réalisation chaque zone de rangement est constituée par une plaque support horizontale pourvue d'empreintes qui reçoivent chacune un outil.
Cette plaque support est susceptible de se déplacer légèrement dans les directions d'un plan horizontal en sorte d'aligner l'ensemble d'outil à la tête à broche multiple.
Cet alignement s'effectue d'une manière automatique en raison de l'extrémité conique 4A du macaron et en raison de l'entrée conique du logement 7.

Il est à noter que les zones de rangement telles que décrites sont alignées suivant un même axe ou alignées suivant plusieurs axes parallèles .

De plus, sur chacun de ces axes les zones de rangement sont disposées à intervalle régulier.

Dans le cas ou les zones de rangement sont disposées suivant plusieurs axes parallèles, les dites zones sont également alignées suivant des axes parallèles, perpendiculaires aux précédents.

Il est bien évident de les axes suivant lesquels sont disposées ces zones sont disposés parallèlement , soit à l'axe de déplacement longitudinal de la machine, soit à l'axe de déplacement transversal de celle ci.

Avantageusement, un poste de positionnement est associé aux zones de rangement. Le poste de positionnement constitue l'origine des déplacements de la broche vers les zones de rangement.

Le poste de positionnement peut également constituer l'origine des déplacements vers la zone de travail.

Il va de soi que la présente invention peut recevoir tous aménagements et toutes variantes sans pour autant sortir du cadre du présent brevet.

REVENDICATIONS :

1. Dispositif pour la fixation d'un outil rotaltif, par exemple une meule (1) à la broche (2) d'une machine outil équipée d'un tel dispositif caractérisé en ce qu'il est constitué :

- par un plateau porte outil (3), amovible, pourvu d'un macaron (4) lequel est doté d'une gorge (5),

- par un corps (6) vissé à la broche (2) de la machine, présentant un logement cylindrique axial (7) dans lequel s'engage le macaron (4) de manière à ce que la gorge (5) se dispose en regard d'orifices radiaux (8) pratiqués dans la paroi cylindrique (9) du corps (6) dans chacun desquels est monté en coulissement un organe radial de blocage (10) qui soit s'engage dans la gorge (5) du macaron (4), soit s'en dégage selon qu'une bague (11) mobile axialement autour du corps (6), pourvue d'un chanfrein interne (12) est soit déplacée axialement dans un sens suivant lequel le chanfrein (12) est amené en contact avec les organes de blocage radiaux (10) pour forcer ceux ci à pénétrer dans la gorge (5) soit déplacée axialement dans l'autre sens pour permettre au chanfrein (12) de libérer les organes radiaux de blocage (10) qui libèrent alors la gorge (5) du macaron (4),

- par un système mécanique (13) d'immobilisation de la bague (11) en translation lorsque celle ci est soit disposée dans une position de blocage suivant laquelle les organes radiaux de blocage (10) sont engagés dans la gorge (5) du macaron, soit suivant une position de déblocage suivant laquelle le chanfrein (12) a libéré les organes radiaux de blocage (10),

- et par au moins un système mécanique (14) reversible de transmission du mouvement de translation entre la bague (11) et le plateau porte outil (3) de sorte que lorsque le macaron (4) du plateau (3) est introduit dans le logement (7) du corps (6), la bague (11) se déplace axialement de sa position de déblocage vers sa position de blocage, et de sorte que lorsque la bague (11) est déplacée axialement de la position de blocage vers sa position de déblocage le plateau porte outil (3) soit forcé à se dégager du logement (7) du corps (6) du dispositif.

2. Dispositif selon la R1 comportant un système mécanique (13) d'immobilisation de la bague en translation soit dans une position de blocage soit dans une position de déblocage caractérisé en ce que le dit système est constitué par un diaphragme élastique, conique, disposé coaxialement au dispositif, solidaire par son pourtour externe de la bague (11) et par son pourtour interne du corps (6) du dispositif, le dit diaphragme pouvant se déformer élastiquement de manière à inverser sa conicité et le dit diaphragme pouvant présenter deux états d'équilibres stables un de ces états correspondants à une conicité dirigée vers la broche (2) l'autre à une conicité dirigée vers le logement (7).

3. Dispositif selon la R2 comportant un diaphragme caractérisé en ce que le diaphragme présente une couronne (13B) en tronc de cône, très peu déformable radialement à laquelle est raccordée une pluralité de pattes élastiques radiales (13A) de même longueur dont l'extrémité libre de chacune prend appui sur la périphérie d'une bague circulaire (20) très peu déformable radialement.

4. Dispositif selon les R1, R2 et R3 comportant un corps (6) lequel présente une paroi cylindrique (9) qui se raccorde à une paroi circulaire transversale (15) surmontée d'un bossage

24          0170604

cylindrique axial, comportant une bague (11) montée autour du corps (6) en coulissement axial et comportant un diaphragme doté d'une bague (20) caractérisé en ce que le dit diaphragme par son contour externe est solidaire de l'extrémité supérieure de la bague (11) et par sa bague (20) est solidaire de l'extrémité inférieure du bossage cylindrique (16), la dite bague (20) étant enfilée sur le dit bossage (16).

5. Dispositif selon la R3 comportant un diaphragme (13) caractérisé en ce que le dit diaphragme est constitué par une rondelle, élastique, conique à laquelle est rapportée la bague (20).

6. Dispositif selon la R5 dont le diaphragme est constitué par une rondelle élastique conique du type étoile caractérisé en ce que la dite rondelle est disposée dans le dispositif de manière à présenter une conicité naturelle lorsque la bague (11) est en position de blocage.

7. Dispositif selon la R1 comportant au moins un système mécanique (14) reversible de transmission du mouvement de translation entre la bague (11) et le macaron (4) du plateau porte meule (3) caractérisé en ce que le dit système (14) déplace la bague (11) vers le plateau porte outil (3), c'est à dire vers sa position de blocage lorsque le macaron (4) de ce dernier est forcé à pénétrer dans le logement (7) du corps (6) et force le macaron (4) du dit plateau à s'extraire de ce logement (7) lorsque la bague (11) est déplacée vers la broche (2) de la machine, c'est à dire vers sa position de déblocage.

8. Dispositif selon la R7 comportant trois systèmes mécaniques (14) caractérisé en ce que chaque système mécanique est constitué par un levier basculant (23) radial au dispositif, monté en pivotement au dessus de la paroi (15), dont une extrémité au delà du point de pivotement coopère en appui avec l'extrémité supérieure de la bague (11) et dont l'autre extrémité en deçà du point de pivotement coopère en appui avec l'extrémité supérieure saillante d'un poussoir mobile (24), s'étendant verticalement, dont l'extrémité inférieure coopère en appui, dans le logement (7), avec le macaron (4) du plateau porte outil.

9. Dispositif selon la R8 dont chaque système mécanique (14) comporte un poussoir (24) caractérisé en ce que chaque poussoir coulisse dans une orifice cylindrique (25) qui débouche d'une part dans le logement (7) et d'autre part dans le fond (26) d'une saignée (27) pratiquée radialement dans le bossage du corps (6) dans laquelle est montée en coulissement l'extrémité correspondante du levier (23).

10. Dispositif selon revendication 8 comportant un système mécanique (14) doté d'un levier basculant (23) caractérisé en ce que le dit levier (23) présente une arête de pivotement (31) qui s'appuie lors du pivotement du levier sur une surface de butée (32) perpendiculaire à l'axe AA du dispositif, et disposée au dessus des dits leviers.

11. Dispositif selon la R10 caractérisé en ce que l'extrémité du levier (23) qui coopère en appui avec l'extrémité supérieure du poussoir (24) est pourvue d'un rondin de guidage (34)

0170604

qui s'engage par ses extrémités dans des gorges verticales (29) ménagées dans les flans de la saignée (27).

12. Machine outil équipée d'un dispositif selon l'ensemble des revendications 1 à (11) dont les déplacements sont commandés par un controleur programmable caractérisée en ce qu'elle est associée à un poste de chargement,et de déchargement constitué par un plan de rangement (42) divisé en plusieurs zones de rangement qui sont susceptibles chacune de recevoir un ensemble dont chaque outil est équipé d'un plateau support (3) et à chacune desquelles sont associées plusieurs tiges (40) verticales mobiles axialement, susceptibles soit de venir en saillie sur le plan de rangement (42) pour coopérer avec une collerette externe (41) ménagée en extrémité inférieure de la bague (11), soit susceptible d'être escamotées sous le dit plan de rangement.

Fig. 1

Fig. 2

0170604

Fig. 3

PL III / 5

0170604

coupe suivant B.B
Fig.5

Fig.4

coupe partielle
suivant C.C

Fig.8

Fig. 6

Fig. 7

Fig. 9

## DOCUMENTS CONSIDERES COMME PERTINENTS

| Catégorie | Citation du document avec indication en cas de besoin, des parties pertinentes | Revendication concernee | CLASSEMENT DE LA DEMANDE (Int Cl 4) |
|---|---|---|---|
| Y | FR-A-2 521 054 (ABRASIFS MERCIER) * En entier * | 1 | B 24 B 45/00 B 24 D 7/16 B 23 B 31/22 |
| A | | 12 | |
| Y | CH-A- 266 696 (JOGEL) * Figures * | 1 | |
| A | US-A-3 735 993 (SEIBERT) * Figures; colonne 4, ligne 61 - colonne 6, ligne 4 * | 2,7 | |
| A | US-A-1 482 566 (KELLER) * Figures * | 3-6 | |
| T | EP-A-0 136 931 (THIBAUT) * Page 6, ligne 20 - page 8, ligne 38; figures 1,3,5 * | 12 | **DOMAINES TECHNIQUES RECHERCHES (Int. Cl.4)** |
| A | CH-A- 260 657 (VOGEL) | | B 24 B B 24 D B 23 B |
| A | FR-A- 877 753 (RÖHM) | | |
| A | US-A-4 021 132 (BENJAMIN et al.) | | |
| | --- -/- | | |

Le présent rapport de recherche a été établi pour toutes les revendications

| Lieu de la recherche | Date d'achèvement de la recherche | Examinateur |
|---|---|---|
| LA HAYE | 02-10-1985 | ESCHBACH D.P.M. |

**Office européen des brevets**

**RAPPORT DE RECHERCHE EUROPEENNE**

0170604
Numéro de la demande

EP 85 45 0016

Page 2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl 4) |
|---|---|---|---|
| A | US-A-3 633 931 (BILZ) | | |

-----

**DOMAINES TECHNIQUES RECHERCHES (Int. Cl.4)**

Le présent rapport de recherche a été établi pour toutes les revendications

| Lieu de la recherche | Date d'achèvement de la recherche | Examinateur |
|---|---|---|
| LA HAYE | 02-10-1985 | ESCHBACH D.P.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82